# EUROPÄISCHE PATENTSCHRIFT

(11) **EP 1 672 014 B1**
(45) Veröffentlichungstag und Bekanntmachung des Hinweises auf die Patenterteilung: **22.08.2007**
(21) Anmeldenummer: 05026195.7
(22) Anmeldetag: 01.12.2005
(51) Int. Cl.: C08K 9/06, C09D 5/24

(54) **Estermischungen**
Ester mixtures
Mélanges d'esters

(30) Priorität: 14.12.2004 DE 102004060043
(43) Veröffentlichungstag der Anmeldung: 21.06.2006
(73) Patentinhaber: LANXESS Deutschland GmbH, 51369 Leverkusen (DE)
(72) Erfinder: Hansel, Jan-Gerd, Dr., 51069 Köln (DE); Kuckert, Eberhard, Dr., 51375 Leverkusen (DE); Feldhues, Ulrich, Dr., 51465 Bergisch Gladbach (DE)

(56) Entgegenhaltungen:
- WO-A-01/00722
- DE-A1- 2 318 411
- US-A- 3 072 591
- US-A- 3 370 032
- US-A1- 2003 065 073
- US-A1- 2003 153 471

## Beschreibung

Die vorliegende Erfindung betrifft Estermischungen enthaltend Trimethylolalkanester aromatischer Carbonsäuren, Trimethylolalkanester aliphatischer Carbonsäuren sowie Trimethylolalkanester sowohl aromatischer als auch aliphatischer Carbonsäuren, ein Verfahren zur deren Herstellung, sowie deren Verwendung als Weichmacher für Kunststoffe.

Weichmacher sind Substanzen, die spröden und harten Kunststoffen, wie zum Beispiel Polyvinylchlorid (PVC), beigemengt werden, um diesen für Verarbeitung und Gebrauch wünschenswerte Eigenschaften wie Biegsamkeit und Dehnbarkeit zu verleihen.

Die für die Anwendung wichtigen Substanzeigenschaften von Weichmachern sind zum Beispiel beschrieben in David F. Cadogan, Christopher J. Howick: "Plasticizers", Ullmann's Encyclopedia of Industrial Chemistry, Electronic Release, 6th ed., chap. 1 - 6, Wiley-VCH, Weinheim 2003 und L. Meier: "Weichmacher", in R. Gächter, H. Müller (Ed.): Taschenbuch der Kunststoffadditive, 3. Ausgabe, S. 357 - S. 382, Hanser Verlag, München 1990. Im Allgemeinen werden flüssige Weichmacher eingesetzt. Bevorzugt haben sie eine Viskosität von unter 100.000 mPa·s, eine Lösetemperatur in Polyvinylchlorid von unter 170 °C und eine Säurezahl von unter 1 mg KOH/g.

Für die Verwendung einer Substanz als Weichmacher ist es außerdem wichtig, dass sie möglichst dauerhaft in dem mit ihr weichgemachten Kunststoff verbleibt. Viele Weichmacher neigen dazu, in mit dem weichgemachten Kunststoff in Kontakt stehende Stoffe, wie zum Beispiel andere Kunststoffe, zu migrieren. Schmier- oder Treibstoffe sowie Seifenlösungen können Weichmacher herauswaschen. Weichmacher mit unzureichender Verträglichkeit mit dem weichzumachenden Kunststoff können sich nach der Verarbeitung oberflächlich absondern und einen unerwünschten, schmierigen Film bilden. Schließlich können Weichmacher aufgrund ihrer Flüchtigkeit aus einer weichgemachten Kunststoffzubereitung heraus verdampfen. Dies führt einerseits zu einer unerwünschten Versprödung der Kunststoffzubereitung und andererseits zum ebenfalls unerwünschten Niederschlag des Weichmachers an kalten Flächen. All diese Phänomene treten in besonderem Maße auf, wenn ein aus weichgemachtem Kunststoff hergestellter Gegenstand über längere Zeit erhöhten Temperaturen ausgesetzt wird. Ein Beispiel für diese sogenannten Hochtemperaturanwendungen sind Kabelummantelungen, die im Motorraum eines Automobils eingesetzt werden.

Bevorzugt werden also Weichmacher mit niedriger Flüchtigkeit, guter Verträglichkeit und niedriger Migrationsneigung eingesetzt.

Neben Phosphorsäureestern und Sulfonsäureestern weisen vor allem die Alkylester von Carbonsäuren günstige Substanzeigenschaften für eine Verwendung als Weichmacher auf. Die technisch relevanten Weichmacher und ihre Anwendung sind bekannt und werden zum Beispiel beschrieben in David F. Cadogan, Christopher J. Howick: "Plasticizers", Ullmann's Encyclopedia of Industrial Chemistry, Electronic Release, 6th ed., Kap. 1 - 6, Wiley-VCH, Weinheim 2003 und L. Meier: "Weichmacher", in R. Gächter, H. Müller (Ed.): Taschenbuch der Kunststoffadditive, 3. Ausgabe, S. 341 ff., Hanser, München 1990. Die Flüchtigkeit von Substanzen nimmt im Allgemeinen mit steigendem Molekulargewicht ab. Daher werden meistens nicht einfache Ester, sondern wegen ihrer höheren Molekulargewichte bevorzugt Ester von mehrbasigen Carbonsäuren mit einwertigen Alkoholen, Ester von einbasigen Carbonsäuren mit mehrwertigen Alkoholen oder Ester von mehrbasigen Carbonsäuren mit mehrwertigen Alkoholen eingesetzt. Bei der letztgenannten Gruppe von Estern handelt es sich um oligomere oder polymere Ester, die wegen ihrer hohen Viskositäten schwieriger zu verarbeiten sind als die beiden erstgenannten Gruppen von niedermolekularen Estern.

Ester von zwei- und dreibasigen Carbonsäuren mit einwertigen Alkoholen werden am häufigsten als Weichmacher eingesetzt. Beispiele hierfür sind die Phthalsäureester, wie zum Beispiel Di-(2-ethylhexyl)-phthalat (DEHP), oder Trimellitsäureester, wie zum Beispiel Trioctyltrimellitat (TOTM). Diester wie Di-(2-ethylhexyl)-phthalat sind aufgrund ihrer verhältnismäßig hohen Flüchtigkeit für Hochtemperaturanwendungen in der Regel nicht geeignet. Der entsprechende Triester der dreibasigen Trimellitsäure, das Trioctyltrimellitat, ist als niedrigflüchtiger Weichmacher für Hochtemperaturanwendungen etabliert. Allerdings ist Trioctyltrimellitat schlechter zu verarbeiten, schlechter verfügbar und deutlich teuerer als Di-(2-ethylhexyl)-phthalat und kann daher für viele Anwendungen nicht eingesetzt werden.

Einige Phthalsäureester, wie zum Beispiel Di-(2-ethylhexyl)-phthalat (DEHP), sind in letzter Zeit in den Verdacht geraten, gesundheitsschädlich zu sein. So muss laut Dangerous Substances Directive 67/548/EEC in der EU als möglicherweise die Fortpflanzungsfähigkeit beeinträchtigend und möglicherweise fruchtschädigend gekennzeichnet werden.

Ester von einbasigen Säuren mit zweiwertigen Alkoholen lassen sich ebenfalls vorteilhaft als Weichmacher verwenden. Beispielsweise werden in US 2,956,978 B1 Dibenzoate verschiedener Glycole als Weichmacher beschrieben. Wie US 6,184,278 B1 lehrt, haben einige dieser Dibenzoate, wie zum Beispiel Ethylenglycol-, Diethylenglycol- oder Triethylenglycoldibenzoat, den Nachteil, dass sie bei 25 °C Feststoffe sind.

US 2,585,448 B1, US 3,370,032 B1 sowie US 2003/0023112 A1 beschreiben gemischte Ester, die durch Umsetzung von Diolen mit einer Mischung aus aliphatischen und aromatischen Carbonsäuren hergestellt werden. Die relativ hohe Flüchtigkeit der Diolester schließt sie jedoch von vielen Anwendungen aus.

DE 2 318 411 A1 schlägt als Weichmacher für Heißklebepräparationen die Substanz Trimethylolpropantribenzoat vor. Da diese Substanz ein Feststoff ist, ist sie im Allgemeinen als Weichmacher ungeeignet.

US 3,072,591 beschreibt Ester aus Polymethylolalkanen, wie zum Beispiel Trimethylolpropan, mindestens einer aromatischen Carbonsäure und aliphatischen Carbonsäuren von mindestens 6 Kohlenstoffatomen, die als Weichmacher für Vinylchloridpolymere verwendbar sind. Bei diesen Estern handelt es sich um sogenannte "gemischte Ester", in denen im selben Molekül sowohl Reste der aromatischen wie auch der aliphatischen Carbonsäuren enthalten sind. Ein Beispiel hierfür ist Trimethylolpropandibenzoatmonolaurat. Diese "gemischten Ester" werden ausdrücklich unterschieden von physikalischen Mischungen von Estern, die nur aromatische oder nur aliphatische Säurereste enthalten (siehe US 3,072,591, Spalte 5, Zeilen 15 - 17). Die Synthese der in US 3,072,591 beanspruchten "gemischten Ester" erfordert ein zweistufiges Syntheseverfahren (siehe US 3,072,591, Spalte 5, Zeilen 8 - 15). Dieses Verfahren hat den Nachteil, dass es zeitaufwändig und umständlich ist, da bei zwei unterschiedlichen Reaktionstemperaturen gearbeitet werden muss. Aufgrund dieses Herstellprozesses sind die "gemischten Ester" im technischen Maßstab schwierig herstellbar.

US 3,894,959 beschreibt Ester, die durch Veresterung einer Mischung bestehend aus 1 bis 50 mol-% einer aromatischen Monocarbonsäure und 99 bis 50 mol-% einer aliphatischen Monocarbonsäure mit einem mehrwertigen Alkohol mit 3 bis 6 Kohlenstoffatomen und 2 bis 4 Hydroxylgruppen hergestellt werden. Diese Substanzen werden als elektrisch isolierende Öle vorgeschlagen. Eine Verwendung als Weichmacher wird nicht erwähnt.

US 3,929,201 beschreibt Ester, die durch Veresterung von Monocarbonsäuren mit Triethanolmethan (3-(2-Hydroxyethyl)pentan-1,5-diol) erhalten werden. Anstelle einer Monocarbonsäure kann auch eine Mischung verschiedener Monocarbonsäuren, wie z. B. eine Mischung einer aromatischen und einer aliphatischen Carbonsäure, eingesetzt werden. Die beanspruchten Ester sind nützlich als Weichmacher für Polyvinylchlorid. Allerdings haben sie den gravierenden Nachteil, dass der zu ihrer Herstellung notwendige Rohstoff Triethanolmethan nicht auf einfache Weise technisch herstellbar und auch nicht kommerziell verfügbar ist.

WO 02/053635 beschreibt Mischungen von Estern aus Trimethylolpropan, Benzoesäure und 2-Ethylhexansäure, die als Weichmacher bevorzugt für Polyvinylchlorid verwendet werden. Die Verwendung von Ethylhexansäure ist laut Information von W. J. Scott, M. D..Collins, H. Nau; Environmental Health Supplements, Volume 102, Number S11, 1994 jedoch toxikologisch bedenklich und ist zu vermeiden.

Der vorliegenden Erfindung lag daher die Aufgabe zugrunde, im technischen Maßstab einfach herstellbare Weichmacher für Kunststoffe bereitzustellen, die günstige Verarbeitungseigenschaften aufweisen, bei Raumtemperatur flüssig sind und auch bei längerer Lagerung flüssig bleiben, sich durch niedrige Flüchtigkeit und hohe thermische Beständigkeit auszeichnen und möglichst keine toxikologisch bedenkliche Substanzen enthalten.

Diese Aufgabe wurde gelöst durch Estermischungen enthaltend
(A) 5 - 22 Gew.-% einer Verbindung der allgemeinen Formel (I), 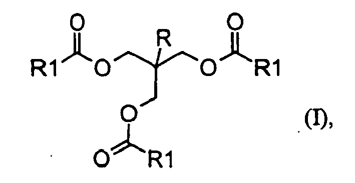 worin
   - R: für H oder eine C₁- bis C₄-Alkylkette steht und
   - R¹: für einen gegebenenfalls mit ein bis drei C₁- bis C₄-Alkylresten substituierten C₆- bis C₁₄-Arylrest steht,
(B) 26 - 44 Gew.-% einer Verbindung der allgemeinen Formel (II), 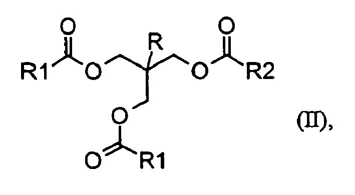 worin
   - R und R¹: die oben genannten Bedeutungen haben und
   - R²: für einen geradkettigen oder verzweigten C₁₁- bis C₂₁-Alkylrest steht,
(C) 28 - 45 Gew.-% einer Verbindung der allgemeinen Formel (III), 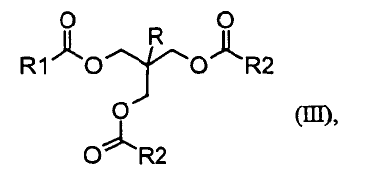 worin
   - R, R¹ und R²: die oben genannten Bedeutungen haben und
(D) 6 - 25 Gew.-% einer Verbindung der allgemeinen Formel (IV), 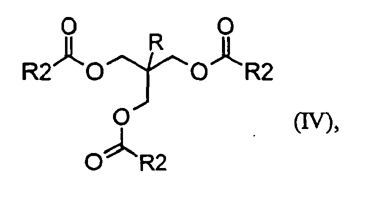
worin
- R und R²: die oben genannten Bedeutungen haben.

Der Rest R leitet sich vorzugsweise von Trimethylolalkanen der allgemeinen Formel (V) ab, 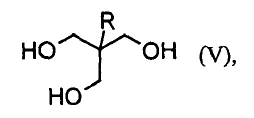 worin
- R: für H oder eine C₁- bis C₄-Alkylkette steht.

Beispiele hierfür sind Trimethylolethan (R = CH₃) oder Trimethylolpropan (R = CH₂CH₃). Die erfindungsgemäßen Estermischungen können Ester von mehreren verschiedenen Trimethylolalkanen enthalten. Besonders leitet sich der Rest R von Trimethylolpropan ab.

Der Rest R¹ leitet sich vorzugsweise von aromatischen Monocarbonsäuren wie Benzoesäure, o-Tolylsäure, m-Tolylsäure, p-Tolylsäure, 4-tert.-Butylbenzoesäure, 1-Naphthoesäure oder 2-Naphthoesäure, insbesondere von Benzoesäure ab.

Der Rest R² leitet sich vorzugsweise von aliphatischen Monocarbonsäuren wie Laurinsäure, Myristinsäure, Palmitinsäure, Stearinsäure, Ölsäure, Arachinsäure oder Behensäure, insbesondere von Laurinsäure ab.

Die erfindungsgemäßen Ester haben vorzugsweise eine Säurezahl von kleiner oder gleich 1 mg KOH/g. Bevorzugt haben sie eine Säurezahl von kleiner oder gleich 0,5 mg KOH/g (Siehe Seite 15).

Die Erfindung umfasst auch ein Verfahren zur Herstellung der in den erfindungsgemäßen Estermischungen einzusetzenden Trimethylolalkanester, dadurch gekennzeichnet, dass
a) ein oder mehrere Trimethylolalkane mit
b) 108 bis 180 mol-% (bezogen auf 100 mol-% Trimethylolalkan) einer oder mehrerer aliphatischer C₁₂- bis C₂₂-Monocarbonsäuren oder aliphatischer C₁₂- bis C₂₂-Monocarbonsäurederivate und
c) 120 bis 300 mol-% (bezogen auf 100 mol-% Trimethylolalkan) einer oder mehrerer aromatischer C₇- bis C₁₅-Monocarbonsäuren oder aromatischer C₇- bis C₁₅-Monocarbonsäurederivate
d) bei Temperaturen zwischen 150 °C und 300 °C verestert werden.
   In einer bevorzugten Ausführungsform des erfindungsgemäßen Verfahrens kann die Veresterung
e) unter Zuhilfenahme von Katalysatoren und/oder
f) unter Abtrennung leichtflüchtiger Nebenprodukte der Veresterung, wie zum Beispiel Wasser, durchgeführt werden.

Wie weiter unten dargestellt wird, reagieren die eingesetzten Reaktanden in der Weise, dass die Acylreste auf die ursprünglich vorhandenen Hydroxylgruppen verteilt werden. Als Konsequenz dessen stellen die Reaktionsprodukte nach vollständiger Veresterung stets Mischungen der Komponenten I bis IV dar, weshalb das Veresterungsverfahren gleichzeitig als Verfahren zur Herstellung von Mischungen der Komponenten I bis IV angesehen werden kann.

Die Veresterung der Carbonsäuren oder Carbonsäurederivate kann gleichzeitig oder nacheinander erfolgen. Bevorzugt erfolgt sie gleichzeitig in der Form, dass eine Mischung der Carbonsäuren oder Carbonsäurederivate in die Veresterung eingesetzt wird.

Die Veresterungsreaktionen können unter Zuhilfenahme von üblichen Katalysatoren, wie zum Beispiel Titan-(IV)-isopropoxylat, Titan-(IV)-butoxylat, Zinn-(II)-2-ethylhexanoat, und/oder von Schleppern, wie zum Beispiel Toluol oder Xylol, beschleunigt werden. Die erfindungsgemäßen Estermischungen können aber auch durch die Umsetzung der oben beschriebenen Trimethylolalkane mit Derivaten der verwendeten Carbonsäuren, wie zum Beispiel Carbonsäureestern, Carbonsäureanhydriden oder Carbonsäurehaliden, hergestellt werden. Diese und weitere Methoden sind dem Fachmann bekannt und zum Beispiel beschrieben in W. Riemenschneider: "Esters, Organic", Ullmann's Encyclopedia of Industrial Chemistry, Electronic Release, 6. Ausgabe, Kap. 5, Wiley-VCH, Weinheim 2003. Die Veresterung kann bis zum vollständigen Umsatz aller in der Reaktionsmischung vorhandenen Hydroxylgruppen durchgeführt oder auch bei unvollständigem Umsatz abgebrochen werden. Bevorzugt wird ein Umsatz von größer als 90 % der vorhandenen Hydroxylgruppen erreicht. Neben der eigentlichen Synthese der Ester kann ihre Herstellung auch einen oder mehrere Aufarbeitungsschritte umfassen, wie zum Beispiel Wäsche mit Wasser oder wässrigen Lösungen, Bleichung, Destillation, Trocknung, Filtration und dergleichen.

Die Summe der eingesetzten Carbonsäuren kann kleiner, gleich oder größer als 300 mol-%, bezogen auf 100 mol-% Trimethylolalkan, sein. Bevorzugt werden 300 bis 350 mol-% Carbonsäuremischung bezogen auf 100 mol-% Trimethylolalkan eingesetzt.

Nach dem Ende der Reaktion kann ein Rest an nicht umgesetzten Carbonsäuren in der Reaktionsmischung verbleiben. Dies ist vor allem dann zu erwarten, wenn mehr Carbonsäuren eingesetzt werden, als 300 mol-% in Bezug auf 100 mol-% Trimethylolalkan entsprechen oder wenn die Veresterung bei unvollständigem Umsatz abgebrochen wird. Im erfindungsgemäßen Herstellverfahren wird ein Rest an nicht umgesetzten Carbonsäuren gegebenenfalls durch einen oder mehrere der oben aufgezählten Aufarbeitungsschritte von der Reaktionsmischung abgetrennt.

Als aromatische C₇- bis C₁₅-Monocarbonsäuren oder aromatische C₇- bis C₁₅-Monocarbonsäurederivate werden vorzugsweise Benzoesäure, o-Tolylsäure, m-Tolylsäure, p-Tolylsäure, 4-tert.-Butylbenzoesäure, 1-Naphthoesäure und/oder 2-Naphthoesäure, oder Derivate dieser Säuren oder Mischungen davon verwendet. Bevorzugt wird Benzoesäure verwendet.

Als aliphatische C₁₂- bis C₂₂-Monocarbonsäuren oder aliphatische C₁₂- bis C₂₂-Monocarbonsäurederivate werden vorzugsweise Laurinsäure, Myristinsäure, Palmitinsäure, Stearinsäure, Ölsäure, Arachinsäure und/oder Behensäure, oder Derivate dieser Säuren oder Mischungen davon, verwendet. Bevorzugt wird Laurinsäure und/oder Palmitinsäure verwendet.

Ganz besonders bevorzugt werden
- aus Trimethylolpropan als Trimethylolalkan;
- Benzoesäure als aromatische C₇- bis C₁₅-Monocarbonsäure; und
- Laurinsäure als aliphatische C₁₂- bis C₂₂-Monocarbonsäure
verwendet.

Im erfindungsgemäßen Herstellverfahren reagieren die eingesetzten Reaktanden so, dass die Acylreste auf die ursprünglich vorhandenen Hydroxylgruppen verteilt werden. Diese Verteilung kann zum Beispiel statistisch sein. Als Konsequenz der Verteilung stellen die Reaktionsprodukte nach vollständiger Veresterung stets Mischungen der oben beschriebenen Komponenten I bis IV dar.

Die Erfindung umfasst auch die Verwendung der Estergemische als Weichermacher für Kunststoffe wie Polyvinylchlorid, Vinylchlorid-basierte Copolymere, Polyvinylidenchlorid, Polyvinylacetale, Polyacrylate, Polyamide, Polylactide, Cellulose und seine Derivate, Kautschukpolymere wie Acrylnitril-Butadien-Kautschuk, hydrierter Acrylnitril-Butadien-Kautschuk, Chloroprenkautschuk, chloriertes Polyethylen, Chlorsulfonylpolyethylen, Ethylen-Propylen-Kautschuk, Acrylatkautschuk und/oder Epichlorhydrinkautschuk. Bevorzugt ist Polyvinylchlorid.

Das Polyvinylchlorid wird dabei vorzugsweise durch Homopolymerisation aus Vinylchlorid nach den für den Fachmann bekannten Methoden wie der Suspensions-, der Emulsions- oder der Massepolymerisation hergestellt. Die erfindungsgemäßen Estermischungen werden vorzugsweise in Gemischen mit 20 bis 99 % Polyvinylchlorid, bevorzugt 45 bis 95 % Polyvinylchlorid, besonders bevorzugt 50 bis 90 % Polyvinylchlorid eingesetzt. Diese Gemische werden Weich-Polyvinylchlorid genannt und können neben den erfindungsbemäßen Estermischungen und Polyvinylchlorid auch noch andere geeignete Zusatzstoffe enthalten. Beispielsweise können Stabilisatoren, Gleitmittel, Füllstoffe, Pigmente, Flammschutzmittel, Lichtstabilisatoren; Treibmittel, polymere Verarbeitungeshilfsmittel, Schlagzähverbesserer, optische Aufheller, Antistatika oder Biostabilisatoren enthalten sein.

Die vorliegende Erfindung betrifft aber auch Kunststoffe, die die erfindungsgemäßen Estergemische enthalten.

Diese erfindungsgemäß mittels der Estermischungen zu synthetisierenden Kunststoffe enthalten vorzugsweise auch Zusatzstoffe wie Stabilisatoren, Gleitmittel, Füllstoffe, Pigmente, Flammschutzmittel, Lichtstabilisatoren, Treibmittel, polymere Verarbeitungshilfsmittel, Schlagzähverbesserer, optische Aufheller, Antistatika und/oder Biostabilisatoren sowie Mischungen davon.

Im Folgenden werden einige geeignete Zusatzstoffe näher beschrieben. Die aufgeführten Beispiele stellen jedoch keine Einschränkung der erfindungsgemässen Gemische dar, sondern dienen lediglich der Erläuterung. Alle Angaben zum Gehalt sind Gewichts-%-Angaben.

Stabilisatoren neutralisieren die während und/oder nach der Verarbeitung des Polyvinylchlorid abgespaltene Salzsäure. Als Stabilisatoren kommen in einer bevorzugten Ausführungsform der erfindungsgemäßen Estermischungen bzw. in den daraus herzustellenden Kunststoffen alle üblichen Polyvinylchlorid-Stabilisatoren in fester und flüssiger Form in Betracht, beispielsweise übliche Epoxy/Zink-, Ca/Zn-, Ba/Zn-, Pb- oder Sn-Stabilisatoren sowie auch säurebindende Schichtsilikate wie Hydrotalcit. Die erfindungsgemässen Estermischungen können in Gemischen mit einem Gehalt an Stabilisatoren von 0,05 bis 7 %, bevorzugt 0,1 bis 5 %, besonders bevorzugt von 0,2 bis 4 % und insbesondere von 0,5 bis 3 % eingesetzt werden.

Gleitmittel sollen zwischen den Polyvinylchlorid-Partikeln wirksam werden und Reibungskräften beim Mischen, Plastifizieren und Verformen entgegenwirken. Als Gleitmittel können die erfindungsgemässen Gemische in einer bevorzugten Ausführungsform alle für die Verarbeitung von Kunststoffen üblichen Gleitmittel enthalten. Beispielsweise kommen in Betracht Kohlenwasserstoffe, wie Öle, Paraffine und PE-Wachse, Fettalkohole mit 6 bis 20 C- Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettige Carbonsäuren als Säurekomponente. Die erfindungsgemässen Estermischungen können in Gemischen mit einem Gehalt an Gleitmitteln von 0,01 bis 10 %, bevorzugt 0,05 bis 5%, besonders bevorzugt von 0,1 bis 3 % und insbesondere von 0,2 bis 2 % eingesetzt werden.

Füllstoffe beeinflussen vor allem die Druck-, Zug- und Biegefestigkeit sowie die Härte und Wärmeformbeständigkeit von weichgemachtem Polyvinylchlorid oder PVB in positiver Weise. Im Rahmen der Erfindung können die Gemische in einer bevorzugten Ausführungsform auch Füllstoffe wie beispielsweise Ruß und andere anorganische Füllstoffe, wie natürliche Calciumcarbonate, beispielsweise Kreide, Kalkstein und Marmor, synthetische Calciumcarbonate, Dolomit, Silikate, Kieselsäure, Sand, Diatomeenerde, Aluminiumsilikate, wie Kaolin, Glimmer und Feldspat enthalten. Vorzugsweise werden als Füllstoffe Calciumcarbonate, Kreide, Dolomit, Kaolin, Silikate, Talkum oder Ruß eingesetzt. Die erfindungsgemässen Estermischungen können in Gemischen mit einem Gehalt an Füllstoffen von 0,01 bis 80 %, bevorzugt 0,1 bis 60 %, besonders bevorzugt von 0,5 bis 50 % und insbesondere von 1 bis 40 % eingesetzt werden.

Die mit den erfindungsgemässen Estermischungen zubereiteten Gemische können in einer bevorzugten Ausführungsform auch Pigmente enthalten, um das erhaltene Produkt an unterschiedliche Einsatzmöglichkeiten anzupassen. Im Rahmen der vorliegenden Erfindung können sowohl anorganische Pigmente als auch organische Pigmente eingesetzt werden. Als anorganische Pigmente können beispielsweise Cadmium-Pigmente, wie CdS, Kobalt-Pigmente, wie CoO/Al₂O₃, und Chrom-Pigmente, beispielsweise Cr₂O₃, verwendet werden. Als organische Pigmente kommen beispielsweise Monoazopigmente, kondensierte Azopigmente, Azomethinpigmente, Anthrachinonpigmente, Chinacridone, Phthalocyaninpigmente, Dioxazinpigmente und Anilinpigmente in Betracht. Die erfindungsgemässen Estermischungen können in Gemischen mit einem Gehalt an Pigmenten von 0,01 bis 10 %, bevorzugt 0,05 bis 5 %, besonders bevorzugt von 0,1 bis 3 % und insbesondere von 0,5 bis 2 % eingesetzt werden.

Um die Entflammbarkeit zu vermindern und die Rauchentwicklung beim Verbrennen zu verringern, können die erfindungsgemässen Gemische in einer bevorzugten Ausführungsform auch Flammschutzmittel enthalten. Als Flammschutzmittel können beispielsweise Antimontrioxid, Phosphatester, Chlorparaffin, Aluminiumhydroxid, Borverbindungen, Molybdäntrioxid, Ferrocen, Calciumcarbonat oder Magnesiumcarbonat verwendet werden. Die erfindungsgemässen Estermischungen können in Gemischen mit einem Gehalt an Flammschutzmittel von 0,01 bis 30 %, bevorzugt 0,1 bis 25 %, besonders bevorzugt von 0,2 bis 20 % und insbesondere von 0,5 bis 15 % eingesetzt werden.

Um Artikel, die aus einem die erfindungsgemässen Estermischungen enthaltenden Gemisch hergestellt wurden, vor einer Schädigung im Oberflächenbereich durch den Einfluss von Licht zu schützen, können die Gemische in einer bevorzugten Ausführungsform auch Lichtstabilisatoren enthalten. Es können im Rahmen der vorliegenden Erfindung beispielsweise Hydroxybenzophenone oder Hydroxyphenylbenzotriazole eingesetzt werden. Die erfindungsgemässen Estermischungen können in Gemischen mit einem Gehalt an Lichtstabilisatoren von 0,01 bis 7 %, bevorzugt 0,1 bis 5 %, besonders bevorzugt von 0,2 bis 4 % und insbesondere von 0,5 bis 3 % eingesetzt werden.

Die Kunststoffe mit den darin enthaltenen erfindungsgemäßen Estermischungen können in einer bevorzugten Ausführungsform auch weitere Weichmacher wie Monoalkylester der Benzoesäure, Benzoesäurediester von Mono-, Di-, Tri- oder Polyalkylenglycolen, Ester von Monocarbonsäuren mit Polyolen, Dialkylester aliphatischer Dicarbonsäuren, Dialkylester aromatischer Dicarbonsäuren, Trialkylester aromatischer Tricarbonsäuren, Phenylester von Alkansulfonsäuren, Alkyl- oder Arylester der Phosphorsäure, Polyester aus Dicarbonsäuren sowie Mischungen davon enthalten. Bevorzugt können die Kunststoffe Trialkylester aromatischer Tricarbonsäuren als weitere Weichmacher enthalten.

Beispiele für weitere Weichmacher sind
- die Monoalkylester der Benzoesäure, wie zum Beispiel Isononylbenzoat,
- die Benzoesäurediester von Mono-, Di-, Tri- oder Polyalkylenglycolen, wie zum Beispiel Propylenglycoldibenzoat, Diethylenglycoldibenzoat, Dipropylenglycoldibenzoat, Triethylenglycoldibenzoat oder Polyethylenglycoldibenzoat und insbesondere Mischungen davon,
- Ester von Monocarbonsäuren mit Polyolen, wie zum Beispiel aus Benzoesäure, Buttersäure und Glycerin erhältliche Veresterungsprodukte, aus Benzoesäure, Laurinsäure und Glycerin erhältliche Veresterungsprodukte, aus Benzoesäure, Laurinsäure und Diethylenglycol erhältliche Veresterungsprodukte, oder aus Benzoesäure, Laurinsäure und Neopentylglycol erhältliche Veresterungsprodukte,
- die Dialkylester aliphatischer Dicarbonsäuren, wie zum Beispiel Di-(2-ethylhexyl)-adipat, Diisononyladipat, Di-(2-ethylhexyl)-sebazat, Di-(2-ethylhexyl)-azelat, Diisononylcyclohexan-1,2-dicarboxylat,
- die Dialkylester aromatischer Dicarbonsäuren, wie zum Beispiel Di-(2-ethylhexyl)-phthalat, Diisononylphthalat, Diisodecylphthalat, Benzylbutylphthalat, Benzylisooctylphthalat, Benzylisononylphthalat,
- die Trialkylester aromatischer Tricarbonsäuren, wie zum Beispiel Trioctyltrimellitat,
- die Phenylester von Alkansulfonsäuren, wie zum Beispiel das Produkt Mesamoll^{®} der LANXESS Deutschland GmbH,
- die Alkyl- oder Arylester der Phosphorsäure, wie zum Beispiel Tri-(2-ethylhexyl)-phosphat, Diphenyl-2-ethylhexyl-phosphat, Diphenylkresylphosphat oder Trikresylphosphat,
- Polyester, die zum Beispiel aus Dicarbonsäuren wie Adipinsäure oder Phthalsäure und Diolen wie 1,2-Propandiol, 1,3-Butandiol, 1,4-Butandiol oder 1,6-Hexandiol hergestellt werden können.

Im Rahmen der Erfindung können die erfindungsgemäßen Estermischungen in einer bevorzugten Ausführungsform auch in Gemischen eingesetzt werden, die weitere Kunststoffe ausgewählt aus der Gruppe bestehend aus Homo- und Copolymeren auf Basis von Ethylen, Propylen, Butadien, Vinylacetat, Glycidylacrylat, Glycidylmethacrylat, Acrylaten und Methacrylaten mit Alkoholkomponenten von verzweigten oder unverzweigten C₁- bis C₁₀-Alkoholen, Styrol oder Acrylnitril enthalten. Zu nennen sind beispielsweise Polyacrylate mit gleichen oder verschiedenen Alkoholresten aus der Gruppe der C₄- bis C₈-Alkohole, besonders des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Nitrilkautschuk, Acrylnitril-Butadien-Styrol-Copolymere, Ethylen-Propylen-Copolymere, Ethylen-Propylen-Dien-Copolymere, Styrol-Acrylnitril-Copolymere, Acrylnitril-Butadien-Rubber, Styrol-Butadien-Elastomere und Methylmethacrylat-Styrol-Butadien-Copolymere.

Die mit den erfindungsgemäßen Estermischungen hergestellten Gemische sind beispielsweise nützlich zur Herstellung von Rohrleitungen, Kabeln, Draht-Ummantelungen, im Innenausbau, im Fahrzeug- und Möbelbau, in Bodenbelägen, medizinischen Artikeln, Lebensmittelverpackungen, Dichtungen, Folien, Verbundfolien, Folien für Verbundsicherheitsglas, insbesondere für den Fahrzeug-Bereich und den Architektur-Sektor, Kunstleder, Spielzeug, Verpackungsbehältern, Klebebandfolien, Bekleidung, Beschichtungen, sowie Fasern für Gewebe.

Die erfindungsgemässen Estermischungen sind gut verarbeitbar und weisen eine geringe Flüchtigkeit auf. Mit den erfindungsgemässen Estermischungen hergestellte Weich-Polyvinylchlorid-Artikel zeichnen sich vor allem durch sehr gute Thermostabilität aus und sind gekennzeichnet durch einen geringen Gewichtsverlust bei der Thermoalterung im Umluftofen und eine hohe HCl-Stabilität im Kongorottest.

Anhand der nachfolgenden Beispiele wird die Erfindung näher erläutert, ohne dass dadurch eine Einschränkung der Erfindung bewirkt werden soll.

### Beispiele

Die angegebenen Teile beziehen sich auf das Gewicht.

### Versuchsvorschrift

268,4 Teile Trimethylolpropan, 464,1 Teile Benzoesäure als aromatische Monocarbonsäure und 440,7 Teile Laurinsäure als aliphatische Monocarbonsäure und 120 Teile Xylol als Schleppmittel wurden in einem Vierhalskolben mit Rührer, Kontaktthermometer, Wasserabscheider, Rückflusskühler und Heizpilz mit Regler unter einem leichten Stickstoffstom aufgeschmolzen. 3,4 Teile Titan-tetra(isopropylat) wurden als Katalysator zugegeben und die Mischung unter Rühren 25,5 h bei 190°C gekocht. Nach dieser Zeit hatten sich 103 Teile Wasser abgeschieden. Die flüchtigen Bestandteile wurden innerhalb von 3 h bei 190 °C und 3 mbar abgezogen. Das Reaktionsprodukt wurde isoliert und die Säurezahl bestimmt.

### Beispiele 1 bis 4 und nicht erfindungsgemäße Vergleichsbeispiele V1 bis V3

Die erfindungsgemäßen Verbindungen 1 bis 4 und die nicht erfindungsgemäßen Verbindungen V1 bis V3 wurden nach der oben angegebenen Vorschrift unter Einsatz der in Tabelle 1 aufgeführten Ausgangsmaterialien hergestellt. Die Subszanz V1 ist ein Feststoff. Er wurde aus Ethanol umkristallisiert und schmilzt bei 82 °C.

### Zusammensetzung der Estermischungen

Die Zusammensetzung der Estermischungen wurde durch Protonen-NMR-Spektroskopie bestimmt. Dazu wurden die Signale der CH₂-Gruppen der Trimethylolpropan-Reste integriert und aus den Integralen die relativen molaren Anteile der einzelnen Komponenten errechnet. Mithilfe der Molmassen können aus den molaren Anteilen die Gewichtsanteile der Komponenten berechnet werden, die in Tabelle 1 als Gewichtsprozent (Gew.-%) angegeben sind.

Tabelle 1 zeigt, dass Estermischungen in der erfindungsgemäßen Zusammensetzung auf einfache Weise nach dem erfindungsgemäßen Herstellverfahren durch geeignete Wahl der Verhältnisse der Ausgangsmaterialien zueinander herzustellen sind.

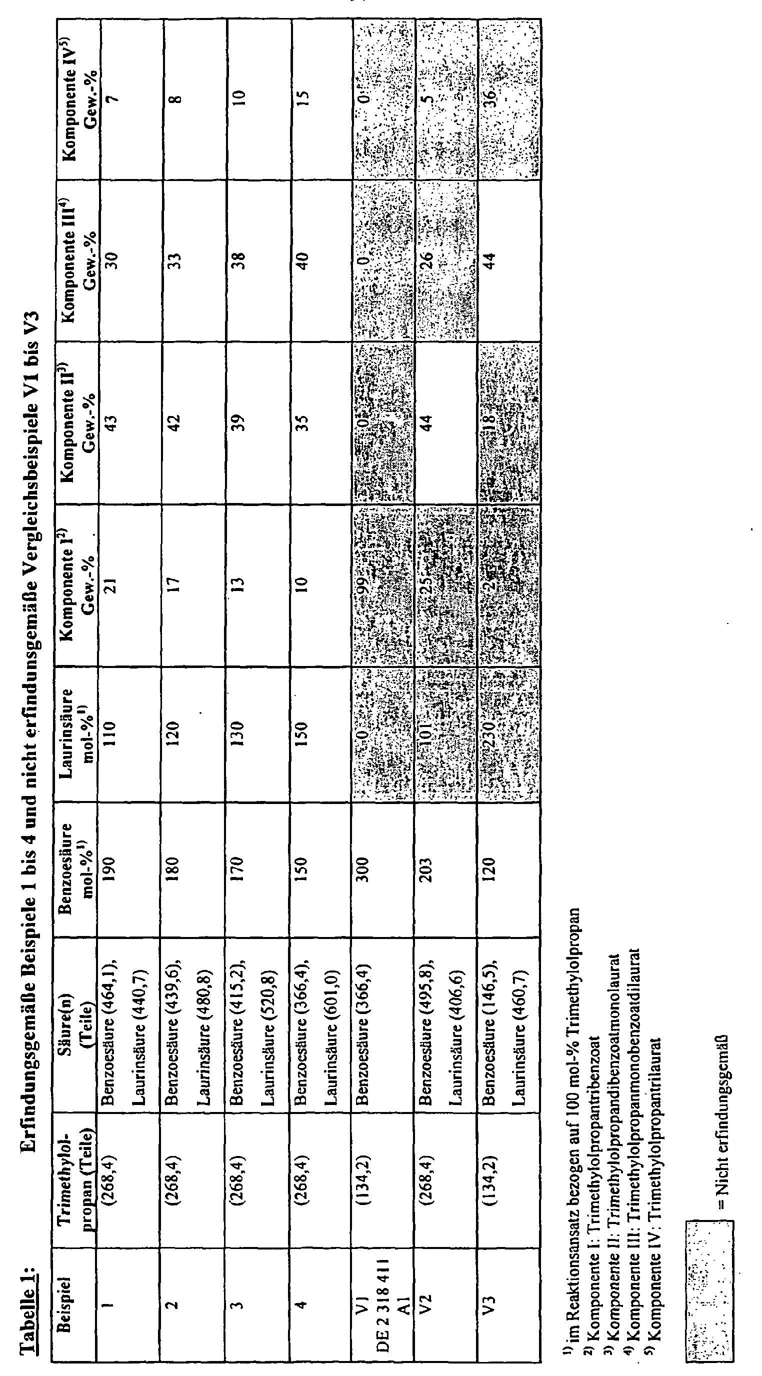

### Physikalische Eigenschaften der Estermischungen

Die für Estermischungen wichtigen physikalischen Daten (siehe Tabelle 2) wurden nach folgenden Methoden bestimmt:
- Viskosität:: nach DIN 53015 (2001) mittels Höppler-Kugelfallviskosimeter
- Pourpoint:: nach DIN ISO 3016 (1982)
- Säurezahl:: nach EN ISO 3682 (1998)

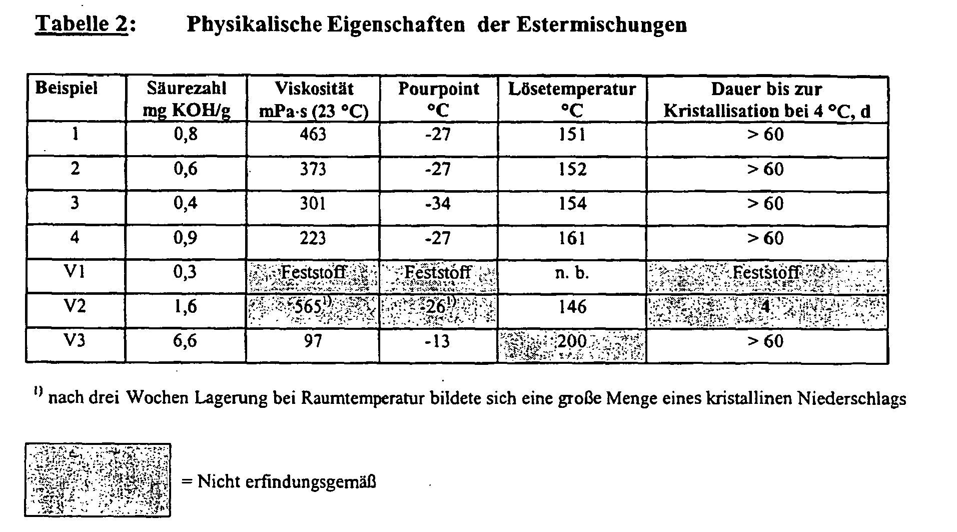

Für die Handhabung und Verarbeitung von Estermischungen als Weichmacher sind deren Viskosität und Pourpoint wichtige Kenngrößen.

Handelsübliche Weichmacher sind Flüssigkeiten mit Viskositäten zwischen etwa 10 mPa·s und über 10.000 mPa·s (siehe zum Beispiel L. Meier: "Weichmacher", in R. Gächter, H. Müller (Ed.): Taschenbuch der Kunststoffadditive, 3. Ausgabe, S. 383 - S. 425, Hanser Verlag, München 1990). Die angegebenen Beispiele liegen innerhalb dieses bevorzugten Viskositätsbereichs.

Der Pourpoint bezeichnet die niedrigste Temperatur, bei der eine Flüssigkeit noch fließfähig ist. Die Pourpoints der angegebenen Beispiele liegen so niedrig, dass die Substanzen bei üblichen Verarbeitungstemperaturen von über 15 °C uneingeschränkt fließfähig bleiben.

### Kristallisationsneigung

Die Verarbeiter von Weich-Polyvinylchlorid sind darauf eingerichtet, flüssige Weichmacher einzusetzen. Eine vollständige oder teilweise Kristallisation eines ursprünglich flüssigen Weichmachers zum Beispiel während der Lagerung ist unerwünscht, da das erneute Auflösen oder Schmelzen und Homogenisieren zusätzliche Arbeitsschritte darstellen.

Die Substanz V1 ist in DE 2 318 411 A1 als Weichmacher für Heißklebepräparationen vorgeschlagen worden. Da V 1 ein Feststoff ist, ist er für die gewöhnliche Verarbeitung zu Weich-Polyvinylchlorid ungeeignet.

In US 3,072,591 B1 wird die Substanz Trimethylolpropan-dibenzoatmonolaurat als Weichmacher für Polyvinylchlorid vorgeschlagen. Ein Substanzgemisch V2, in dem Benzoyl- und Lauroylreste wie in der Substanz Trimethylolpropan-dibenzoatmonolaurat im molaren Verhältnis 2 : 1 enhalten sind, bildet nach drei Wochen Lagerung bei Raumtemperatur eine große Menge eines kristallinen Niederschlags. Die Kristallisation beginnt bei Lagerung bei 4 °C schon nach vier Tagen. V2 besitzt also eine unzureichende Lagerstabilität und ist daher als Weichmacher nicht geeignet.

Die erfindungsgemäßen Estermischungen zeichnen sich überraschender Weise und aus dem Stand der Technik nicht vorhersehbar dadurch aus, dass sie bei Raumtemperatur Flüssigkeiten sind und keine Neigung zur Kristallisation zeigen. Wie der Vergleich in Tabelle 2 zeigt, sind die erfindungsgemäßen Estermischungen im Gegensatz zu den nicht erfindungsgemäßen Estermischungen durch eine deutlich geringere Kristallisationsneigung gekennzeichnet. Die Estermischungen 1 bis 4 bleiben selbst nach über 60 Tagen Lagerung bei 4 °C klar und flüssig.

### Lösetemperatur

Die Lösetemperatur in Polyvinylchlorid ist eine wichtige Kenngröße zur Beschreibung des Geliervermögens eines Weichmachers. Weichmacher mit einer Lösetemperatur von über 170°C sind nicht mehr wirtschaftlich, da ihre Verarbeitung zu viel Energie beansprucht. Darüber hinaus deutet eine Lösetemperatur von über 170 °C auf eine mangelhafte Verträglichkeit zwischen Weichmacher und Polyvinylchlorid hin.

Die erfindungsgemäßen Estermischungen 1 bis 5 besitzen ein gutes Geliervermögen. Das Vergleichsbeispiel V3, dessen Säurekomponente überwiegend aus Laurinsäure besteht, weist eine Lösetemperatur von über 170 °C auf und ist daher nicht als Weichmacher geeignet.

### Flüchtigkeit

Die Flüchtigkeit der erfindungsgemäßen Estermischung 2 und des handelsüblichen Weichmachers Di-(2-ethylhexyl)-phthalat ("Vestinol^{®} AH" der Oxeno Olefinchemie GmbH, Abkürzung DEHP) wurde durch Ermittlung des Gewichtsverlustes beim Erhitzen des Weichmachers auf 130 °C mit Hilfe eines Brabender H-A-G, E' Feuchtigkeitsbestimmers bestimmt. Der Gewichtsverlust wird als Prozentsatz bezogen auf die eingesetzte Menge angegeben.

**Tabelle 3: Flüchtigkeit**

| Versuchsdauer, h | Gewichtsverlust DEHP | Gewichtsverlust Beispiel 2 |
|---|---|---|
| 1 | 0,5 % | 0,2 % |
| 2 | 0,9 % | 0,3% |
| 4 | 1,3% | 0,2 % |
| 6 | 1,7% | 0,2% |

Die Estermischung in Beispiel 2 zeichnet sich durch eine geringere Flüchtigkeit als der Standardweichmacher Di-(2-ethylhexyl)-phthalat aus.

### Polyvinylchlorid-Compounds

Zur weiteren Prüfung wurde unter Verwendung der Estermischungen 1 bis 4 und der in Tabelle 4 aufgelisteten Zusatzstoffe die Weich-Polyvinylchlorid-Compounds vom Typ Epoxy/Zn (mit Epoxy-Zink-Stabilisator) und Typ Pb (mit Blei-Stabilisator) hergestellt.

**Tabelle 4: Zusammensetzung der Polyvinylchlorid-Compounds**

| Bestandteil | Teile in Compound Typ Epoxy/Zn | Teile in Compound Typ Pb |
|---|---|---|
| Polyvinylchlorid (Vinnolit ^{®}H70 DF) | 100 | 100 |
| Weichmacher | 70 | 70 |
| Stabilisator (Crompton Mark^{®} EZ 735)¹⁾ | 12 | 0 |
| Stabilisator (Interstab ^{®}LGH 6017) ²⁾ | 0 | 8 |
| Calciumstearat | 1 . | 1 |
| Kreide (Omya ^{®}BSH)³⁾ | 30 | 30 |
| Antioxidans (Ciba^{®} Irganox ^{®}1010) ⁴⁾ | 0,2 | 0,2 |

| | | |
|---|---|---|
| ¹⁾ Crompton Mark^{®} EZ 735 ist ein Epoxy/Zn-Stabilisator. ²⁾ Interstab^{®} LGH 6017 ist ein Bleistabilisator der Firma Akcros Chemicals. Er enthält laut Sicherheitsdatenblatt ca. 2 % Bleistearat (CAS-Nr. 1072-35-1), ca. 6 % dibasisches Bleistearat (CAS-Nr. 12578-12-0) und ca. 83 % dibasisches Bleiphthalat (CAS-Nr. 57142-78-6). 3) Omya^{®} BSH ist eine Kreide aus der Champagne. Das Produkt ist beschichtet. 4) Ciba^{®} Irganox^{®} 1010 der Firma Ciba Specialty Chemicals ist ein phenolisches Antioxidant mit der Formel Pentaerythtrit-tetrakis-(3,5-ditert.-butyl-4-hydroxycinnamat) (CAS-Nr. 6683-19-8). | | |

Die genannten Komponenten wurden zunächst bei Raumtemperatur vermischt und anschließend unter folgenden Bedingungen gewalzt:
- Walze:: Servitec Polimix 110 L Temperatur:
160°C
- Dauer:: 10 min
- Walzengeschwindigkeit vordere Walze:: 20 (U/min)
- Walzengeschwindigkeit hintere Walze:: 24 (U/min)
- Dicke des Walzfells:: 0,7 mm

Das abgekühlte Walzfell wurde danach unter folgenden Bedingungen zu Folien gepresst:
- Pressentyp:: Schwabenthan Polystat 200T
- Temperatur:: 170 °C
- Dauer:: 10 min
- Druck:: 400 bar
- Foliendicke:: 0,3 - 1 mm

### Thermische Beständigkeit der Polyvinylchlorid-Compounds

Die thermische Beständigkeit der Folien wurde mit folgenden Testmethoden ermittelt:

### Lagerung im Umluftofen:

Folien der Größe 30 x 30 mm mit einer Dicke von 1 mm wurden hängend in einem Umluftofen bei den in Tabelle 5 angegebenen Temperaturen und Zeiten gelagert. Nach der Lagerung wurden die Gewichtsveränderungen ermittelt und in % bezogen auf das Gewicht der eingesetzten Folie angegeben.

### Kongorottest:

Der Kongorottest wurde mit aus Walzfellen der Dicke 0,7 mm gewonnenem Granulat nach DIN 53381-1 von 1971 durchgeführt. Die Zeit, nach der der durch die HCl-Abspaltung bei 200 °C eintretende Farbumschlag des Indikators sichtbar wird, ist in Tabelle 5 aufgeführt.

**Tabelle 5: Thermische Beständigkeit der PCV-Compounds**

| **Test** | **Umluftofen 7d/120°C** | **Umluftofen 14d/140°C** | **Umluftofen 7d /120°C** | **Umluftofen 14d/140°C** | **Kongorot** |
|---|---|---|---|---|---|
| Compd. Typ | Epoxy/Zn | Epoxy/Zn | Pb | Pb | Pb |
| Weichmacher | Gewichtsveränderung | Gewichtsveränderung | Gewichtsveränderung | Gewichtsveränderung | min bis Umschl. |
| 1 | -1,8 % | -4,2 % | -1,7 % | -7,9 % | 215 |
| 2 | -1,4 % | - 3,6 % | -2,6 % | -7,1 % | 233 |
| 3 | -1,7 % | -4,7 % | -1,9 % | - 7,3 % | 241 |
| TOTM | -2,0 % | -7,1 % | -1,5 % | -8,3 % | 148 |

Eine hohe thermische Beständigkeit drückt sich in einem möglichst geringen Gewichtsverlust im Umluftofen und in einer möglichst langen Dauer bis zum Umschlag des Kongorot-Indikators aus. Die Daten in Tabelle 5 belegen die im Vergleich zu Trioctyltrimellitat durchschnittlich bessere thermische Beständigkeit der erfindungsgemäßen Estermischungen.

### Migration

Um die Migration der erfindungsgemäßen Estermischungen aus Weich-Polyvinylchlorid in einen anderen Kunststoff zu bewerten, wurden kreisrunde Prüfkörper (∅ 50 mm) aus dem oben beschriebenen Polyvinylchlorid-Compound Typ Epoxy/Zn hergestellt, beidseitig mit PolyethylenFolie (Atofina Laqtene^{®} LDO 0304) kontaktiert, die kontaktierten Prüfkörper mit einem 5-kg-Gewicht beschwert in einem Trockenschrank bei 70 °C gelagert und über einen Zeitraum von 12 Tagen die Gewichtsveränderung der Prüfkörper verfolgt. In Tabelle 6 sind die Mittelwerte der Gewichtsveränderungen aus einer Dreifachbestimmung als Gewichts-% bezogen auf die ursprünglichen Probengewichte wiedergegeben.

**Tabelle 6: Weichmachermigration**

| **Eingesetzter Estermischung/ Weichmacher** | **1 Tag** | **2 Tage** | **5 Tage** | **12 Tage** |
|---|---|---|---|---|
| 1 | -0,5% | -1,2 % | -1,5% | -1,5% |
| 2 | -1,0 % | -1,4% | -1,7% | -1,8% |
| TOTM | -1,3% | -1,8% | -2,3% | -2,5% |

Je größer der gemessene Gewichtsverlust, desto größer die durch Migration in das Polyethylen übergegangene Menge Estermischung/Weichmacher. Die Daten in Tabelle 7 belegen die im Vergleich zu Trioctyltrimellitat (TOTM) deutlich bessere Migrationsbeständigkeit der erfindungsgemäßen Estermischungen 1 und 2.

### Extraktion

Um die Extraktion der erfindungsgemäßen Estermischungen aus Weich-Polyvinylchlorid durch flüssige Medien zu bewerten, wurden kreisrunde Prüfkörper (∅ 60 mm) aus dem oben beschriebenen Polyvinylchlorid-Compound Typ Epoxy/Zn hergestellt, in eine mit 50 ml der in Tabelle 7 angegebenen Medien gefüllte Petrischale getaucht und die Schalen in einem Trockenschrank bei der in Tabelle 7 angegebenen Temperatur 10 Tage gelagert. Danach wurde die Gewichtsveränderung der gereinigten Prüfkörper bestimmt und in Tabelle 7 als Gewichts-% bezogen auf die ursprünglichen Probengewichte wiedergegeben.

**Tabelle 7: Weichmacherextraktion**

| **Eingesetzter Estermischung/ Weichmacher** | **ASTM-ÖI 23 °C** | **ASTM-ÖI 60 °C** | **IRM 902 23 °C** | **IRM 902 60 °C** | **IRM 903 23 °C** | **IRM 903 60 °C** |
|---|---|---|---|---|---|---|
| 1 | -2,5% | -17,0% | -2,2% | -15,9% | -2,9% | -13,2% |
| 2 | -3,5% | -18,2% | -2,6% | -15,8% | -3,8% | -13,1 % |
| TOTM | -7,3% | -18,9% | -4,3% | -17,0 % | -10,9% | -14,0 % |

Je größer der gemessene Gewichtsverlust, desto größer die durch Extraktion in das Medium übergegangene Menge Weichmacher. Die Daten in Tabelle 7 belegen die im Vergleich zu Trioctyltrimellitat deutlich bessere Extraktionsbeständigkeit der erfindungsgemäßen Weichmacher 1 und 2.

## Patentansprüche

1. Estermischung enthaltend
(A) 5 - 22 Gew.-% einer Verbindung der allgemeinen Formel (I), 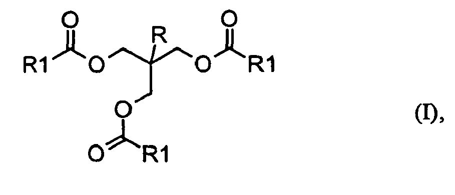 worin
R für H oder eine C₁- bis C₄-Alkylkette steht und
R¹ für einen gegebenenfalls mit ein bis drei C₁- bis C₄-Alkylresten substituierten C₆- bis C₁₄-Arylrest steht,
(B) 26 - 44 Gew.-% einer Verbindung der allgemeinen Formel (II), 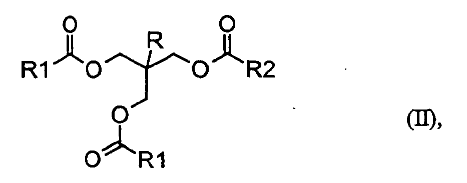 worin
R und R¹ die oben genannten Bedeutungen haben und
R² für einen geradkettigen oder verzweigten C₁₁- bis C₂₁-Alkylrest steht,
(C) 28 - 45 Gew.-% einer Verbindung der allgemeinen Formel (III), 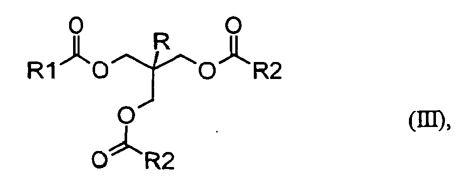 worin
R, R¹ und R² die oben genannten Bedeutungen haben und
(D) 6 - 25 Gew.-% einer Verbindung der allgemeinen Formel (IV), 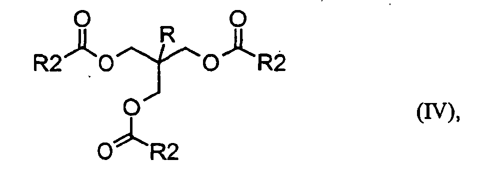
worin
R und R² die oben genannten Bedeutungen haben.

2. Estermischung enthaltend
(A) 10 - 21 Gew.-% einer Verbindung der allgemeinen Formel (I),
(B) 34 - 43 Gew.-% einer Verbindung der allgemeinen Formel (II),
(C) 29 - 40 Gew.-% einer Verbindung der allgemeinen Formel (III) und
(D) 7 -15 Gew.-% einer Verbindung der allgemeinen Formel (IV),
worin
in den Formeln (I) bis (IV) wie oben dargestellt die Reste R, R¹ und R² die in Anspruch 1 genannten Bedeutungen haben.

3. Estermischung gemäß Ansprüchen 1 und/oder 2, **dadurch gekennzeichnet, dass** der Rest R¹ sich von aromatischen Monocarbonsäuren wie Benzoesäure, o-Tolylsäure, m-Tolylsäure, p-Tolylsäure, 4-tert.-Butylbenzoesäure, 1-Naphthoesäure oder 2-Naphthoesäure ableitet.

4. Estermischung gemäß den Ansprüchen 1 und/oder 2, **dadurch gekennzeichnet, dass** der Rest R² sich von aliphatischen Monocarbonsäuren wie Laurinsäure, Myristinsäure, Palmitinsäure, Stearinsäure, Ölsäure, Arachinsäure oder Behensäure ableitet.

5. Estermischung gemäß den Ansprüchen 1 und/oder 2, **dadurch gekennzeichnet, dass** der Rest R sich von einem Trimethylolalkan der allgemeinen Formel (V) 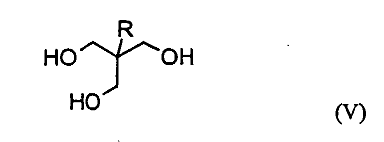 worin
R für H oder eine C₁- bis C₄-Alkylkette steht, ableitet.

6. Estermischung gemäß den Ansprüchen 1 und/oder 2 und 5, **dadurch gekennzeichnet, dass** der Rest R sich von Trimethylolalkanen wie Trimethylolpropan oder Trimethylolethan, ableitet.

7. Verfahren zur Herstellung der Estermischung, **dadurch gekennzeichnet, dass**
a) ein oder mehrere Trimethylolalkane mit
b) 108 bis 180 mol-% (bezogen auf 100 mol-% Trimethylolalkan) einer oder mehrerer aliphatischer C₁₂- bis C₂₂-Monocarbonsäuren oder aliphatischer C₁₂- bis C₂₂-Monocarbonsäurederivate und
c) 120 bis 300 mol-% (bezogen auf 100 mol-% Trimethylolalkan) einer oder mehrerer aromatischer C₇- bis C₁₅-Monocarbonsäuren oder aromatischer C₇- bis C₁₅-Monocarbonsäurederivate
d) bei Temperaturen zwischen 150 °C und 300 °C verestert werden.

8. Verfahren gemäß Anspruch 7, **dadurch gekennzeichnet, dass** dieses
e) unter Zuhilfenahme von Katalysatoren und/oder
f) unter Abtrennung leichtflüchtiger Nebenprodukte der Veresterung durchgeführt wird.

9. Verfahren zur Herstellung der Estermischung gemäß der Ansprüche 7 oder 8, **dadurch gekennzeichnet, dass** 110 bis 150 mol-% (bezogen auf 100 mol-% Trimethylolalkan) einer oder mehrerer aliphatischer C₁₂- bis C₂₂-Monocarbonsäuren oder aliphatischer C₁₂- bis C₂₂-Monocarbonsäurederivate und mindestens die zu 300 mol-% (bezogen auf 100 mol-% Trimethylolalkan) fehlende Menge einer oder mehrerer aromatischer C₇- bis C₁₅-Monocarbonsäuren oder aromatischer C₇- bis C₁₅-Monocarbonsäurederivate eingesetzt werden.

10. Verfahren zur Herstellung der Estermischung gemäß einer der Ansprüche 7 bis 9, **dadurch gekennzeichnet, dass** als Trimethylolalkan Trimethylolpropan oder Trimethylolethan, eingesetzt wird.

11. Verfahren zur Herstellung der Estermischung gemäß einer der Ansprüche 7 bis 9, **dadurch gekennzeichnet, dass**
• die aromatischen C₇- bis C₁₅-Monocarbonsäuren oder aromatischen C₇- bis C₁₅-Monocarbonsäurederivate unsubstituiert oder C₁- bis C₄-alkylsubstituiert sein können und/oder
• die aliphatischen C₁₂- bis C₂₂-Monocarbonsäuren oder aliphatischen C₁₂- bis C₂₂-Monocarbonsäurederivate geradkettig oder verzweigt, gesättigt oder olefinisch ungesättigt sein können.

12. Verfahren zur Herstellung der Estermischung gemäß einer der Ansprüche 7 bis 9 und 11, **dadurch gekennzeichnet, dass** die aromatischen C₇- bis C₁₅-Monocarbonsäuren oder aromatischen C₇- bis C₁₅-Monocarbonsäurederivate Benzoesäure, o-Tolylsäure, m-Tolylsäure, p-Tolylsäure, 4-tert.-Butylbenzoesäure, 1-Naphthoesäure und/oder 2-Naphthoesäure, insbesondere Benzoesäure, oder Derivate dieser Säuren oder Mischungen davon, sind.

13. Verfahren zur Herstellung der Estermischung gemäß einer der Ansprüche 7 bis 9 und 11, **dadurch gekennzeichnet, dass** die aliphatischen C₁₂- bis C₂₂-Monocarbonsäuren oder aliphatischen C₁₂- bis C₂₂-Monocarbonsäurederivate Laurinsäure, Myristinsäure, Palmitinsäure, Stearinsäure, Ölsäure, Arachinsäure und/oder Behensäure, insbesondere Laurinsäure und/oder Palmitinsäure, oder Derivate dieser Säuren oder Mischungen davon, sind.

14. Verfahren zur Herstellung der Estermischung gemäß einer der Ansprüche 7 bis 9, **dadurch gekennzeichnet, dass**
• Trimethylolpropan als Trimethylolalkan;
• Benzoesäure als aromatische C₇- bis C₁₅-Monocarbonsäure; und
• Laurinsäure als aliphatische C₁₂- bis C₂₂-Monocarbonsäure
verwendet werden.

15. Verwendung der Estergemische gemäß Anspruch 1 als Weichermacher für Kunststoffe wie Polyvinylchlorid, Vinylchlorid-basierte Copolymere, Polyvinylidenchlorid, Polyvinylacetale, Polyacrylate, Polyamide, Polylactide, Cellulose und seine Derivate, Kautschukpolymere wie Acrylnitril-Butadien-Kautschuk, hydrierter Acrylnitril-Butadien-Kautschuk, Chloroprenkautschuk, chloriertes Polyethylen, Chlorsulfonylpolyethylen, Ethylen-Propylen-Kautschuk, Acrylatkautschuk und/oder Epichlorhydrinkautschuk.

16. Kunststoffe enthaltend die Estergemische gemäß Anspruch 1.

17. Kunststoffe gemäß Anspruch 16, **dadurch gekennzeichnet, dass** diese Zusatzstoffe wie Stabilisatoren, Gleitmittel, Füllstoffe, Pigmente, Flammschutzmittel, Lichtstabilisatoren, Treibmittel, polymere Verarbeitungshilfsmittel, Schlagzähverbesserer, optische Aufheller, Antistatika und/oder Biostabilisatoren sowie Mischungen davon enthalten.

18. Kunststoffe gemäß der Ansprüche 16 oder 17, **dadurch gekennzeichnet, dass** diese als weitere Weichmacher Monoalkylester der Benzoesäure, Benzoesäurediester von Mono-, Di-, Tri- oder Polyalkylenglycolen, Dialkylester aliphatischen Disäuren, Dialkylester aromatischer Disäuren, Trialkylester aromatischer Trisäuren, Phenylester von Alkansulfonsäuren, Alkyl- oder Arylester der Phosphorsäure, Polyester aus Dicarbonsäuren sowie Mischungen davon enthalten.

## Claims

1. Ester mixture containing
(A) 5-22% by weight of a compound of the general formula (I) 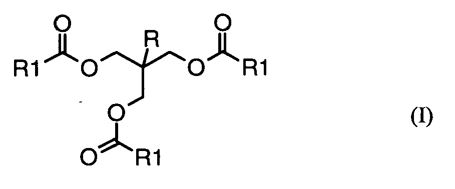 in which
R is H or a C₁- to C₄-alkyl chain and
R¹ is a C₆- to C₁₄-aryl radical optionally substituted by one to three C₁- to C₄-alkyl radicals,
(B) 26-44% by weight of a compound of the general formula (II) 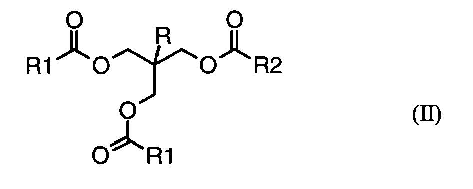 in which
R and R¹ are each as defined above and
R² is a straight-chain or branched C₁₁- to C₂₁-alkyl radical,
(C) 28-45% by weight of a compound of the general formula (III) 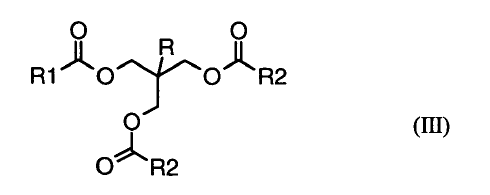 in which
R, R¹ and R² are each as defined above and
(D) 6-25% by weight of a compound of the general formula (IV) 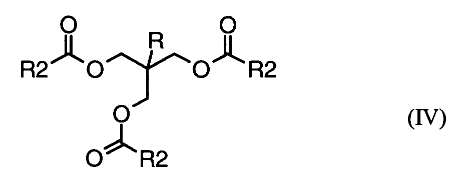
in which
R and R² are each as defined above.

2. Ester mixture containing
(A) 10-21 % by weight of a compound of the general formula (I),
(B) 34-43% by weight of a compound of the general formula (II),
(C) 29-40% by weight of a compound of the general formula (III) and
(D) 7-15% by weight of a compound of the general formula (IV),
in which
the R, R¹ and R² radicals in the formulae (I) to (IV) as shown above are each as defined in Claim 1.

3. Ester mixture according to Claims 1 and/or 2, **characterized in that** the R¹ radical derives from aromatic monocarboxylic acids such as benzoic acid, o-toluic acid, m-toluic acid, p-toluic acid, 4-tert-butylbenzoic acid, 1-naphthoic acid or 2-naphthoic acid.

4. Ester mixture according to Claims 1 and/or 2, **characterized in that** the R² radical derives from aliphatic monocarboxylic acids such as lauric acid, myristic acid, palmitic acid, stearic acid, oleic acid, arachic acid or behenic acid.

5. Ester mixture according to Claims 1 and/or 2, **characterized in that** the R radical derives from a trimethylolalkane of the general formula (V) 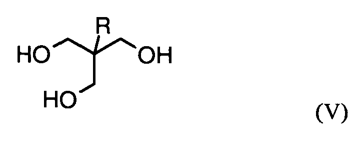 in which
R is H or a C₁- to C₄-alkyl chain.

6. Ester mixture according to Claims 1 and/or 2 and 5, **characterized in that** the R radical derives from trimethylolalkanes such as trimethylolpropane or trimethylolethane.

7. Process for preparing the ester mixture, **characterized in that**
a) one or more trimethylolalkanes are esterified with
b) 108 to 180 mol% (based on 100 mol% of trimethylolalkane) of one or more aliphatic C₁₂- to C₂₂-monocarboxylic acids or aliphatic C₁₂- to C₂₂-monocarboxylic acid derivatives and
c) 120 to 300 mol% (based on 100 mol% of trimethylolalkane) of one or more aromatic C₇- to C₁₅-monocarboxylic acids or aromatic C₇- to C₁₅-monocarboxylic acid derivatives
d) at temperatures between 150°C and 300°C.

8. Process according to Claim 7, **characterized in that** it is carried out
e) with the aid of catalysts and/or
f) with removal of volatile by-products of the esterification.

9. Process for preparing the ester mixture according to Claims 7 or 8, **characterized in that** 110 to 150 mol% (based on 100 mol% of trimethylolalkane) of one or more aliphatic C₁₂- to C₂₂-monocarboxylic acids or aliphatic C₁₂- to C₂₂-monocarboxylic acid derivatives and at least the remaining amount to 300 mol% (based on 100 mol% of trimethylolalkane) of one or more aromatic C₇- to C₁₅-monocarboxylic acids or aromatic C₇- to C₁₅-monocarboxylic acid derivatives are used.

10. Process for preparing the ester mixture according to one of Claims 7 to 9, **characterized in that** the trimethylolalkane used is trimethylolpropane or trimethylolethane.

11. Process for preparing the ester mixture according to one of Claims 7 to 9, **characterized in that**
• the aromatic C₇- to C₁₅-monocarboxylic acids or aromatic C₇- to C₁₅-monocarboxylic acid derivatives may be unsubstituted or C₁- to C₄-alkyl-substituted and/or
• the aliphatic C₁₂- to C₂₂-monocarboxylic acids or aliphatic C₁₂- to C₂₂-monocarboxylic acid derivatives may be straight-chain or branched, saturated or olefinically unsaturated.

12. Process for preparing the ester mixture according to one of Claims 7 to 9 and 11, **characterized in that** the aromatic C₇- to C₁₅-monocarboxylic acids or aromatic C₇- to C₁₅-monocarboxylic acid derivatives are benzoic acid, o-toluic acid, m-toluic acid, p-toluic acid, 4-tert-butylbenzoic acid, 1-naphthoic acid and/or 2-naphthoic acid, in particular benzoic acid, or derivatives of these acids or mixtures thereof.

13. Process for preparing the ester mixture according to one of Claims 7 to 9 and 11, **characterized in that** the aliphatic C₁₂- to C₂₂-monocarboxylic acids or aliphatic C₁₂- to C₂₂-monocarboxylic acid derivatives are lauric acid, myristic acid, palmitic acid, stearic acid, oleic acid, arachic acid and/or behenic acid, in particular lauric acid and/or palmitic acid, or derivatives of these acids or mixtures thereof.

14. Process for preparing the ester mixture according to one of Claims 7 to 9, **characterized in that**
• trimethylolpropane is used as the trimethylolalkane;
• benzoic acid is used as the aromatic C₇- to C₁₅-monocarboxylic acid; and
• lauric acid is used as the aliphatic C₁₂- to C₂₂-monocarboxylic acid.

15. Use of the ester mixtures according to Claim 1 as plasticizers for polymers such as polyvinyl chloride, vinyl chloride-based copolymers, polyvinylidene chloride, polyvinyl acetals, polyacrylates, polyamides, polylactides, cellulose and its derivatives, rubber polymers such as acrylonitrile-butadiene rubber, hydrogenated acrylonitrile-butadiene rubber, chloroprene rubber, chlorinated polyethylene, chlorosulphonyl polyethylene, ethylene-propylene rubber, acrylate rubber and/or epichlorohydrin rubber.

16. Polymers comprising the ester mixtures according to Claim 1.

17. Polymers according to Claim 16, **characterized in that** they comprise additives such as stabilizers, lubricants, fillers, pigments, flame retardants, light stabilizers, blowing agents, polymeric processing assistants, impact modifiers, optical brighteners, antistats and/or biostabilizers, and also mixtures thereof.

18. Polymers according to Claims 16 or 17, **characterized in that** they comprise, as further plasticizers, monoalkyl esters of benzoic acid, benzoic diesters of mono-, di-, tri- or polyalkylene glycols, dialkyl esters of aliphatic diacids, dialkyl esters of aromatic diacids, trialkyl esters of aromatic triacids, phenyl esters of alkanesulphonic acids, alkyl or aryl esters of phosphoric acid, polyesters of dicarboxylic acids, and also mixtures thereof.

## Revendications

1. Mélange d'esters comprenant :
(A) de 5 à 22 % en poids d'un composé de formule générale (I), 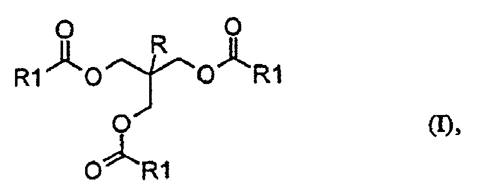 dans laquelle
R représente un atome d'hydrogène ou une chaîne alkyle en C₁ à C₄, et
R¹ représente un radical aryle en C₆ à C₁₄, éventuellement substitué par de un à trois radicaux alkyle en C₁ à C₄,
(B) de 26 à 44 % en poids d'un composé de formule générale (II), 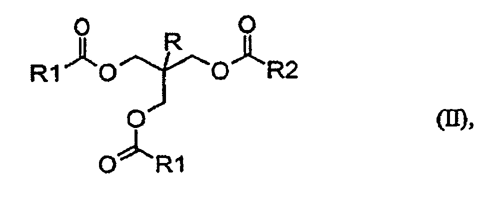 dans laquelle
R et R¹ présentent les significations mentionnées ci-dessus, et
R² représente un radical alkyle en C₁₁ à C₂₁ linéaire ou ramifié,
(C) de 28 à 45 % en poids d'un composé de formule générale (III), 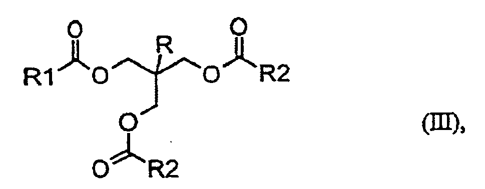 dans laquelle
R, R¹ et R² présentent les significations mentionnées ci-dessus, et
(D) de 6 à 25 % en poids d'un composé de formule générale (IV), 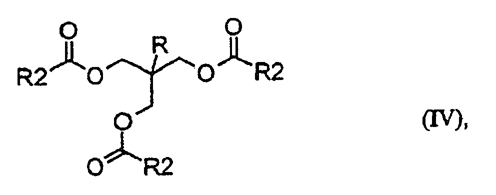
dans laquelle
R et R² présentent les significations mentionnées ci-dessus.

2. Mélange d'esters comprenant :
(A) de 10 à 21 % en poids d'un composé de formule générale (I),
(B) de 34 à 43 % en poids d'un composé de formule générale (II),
(C) de 29 à 40 % en poids d'un composé de formule générale (III) et
(D) de 7 à 15 % en poids d'un composé de formule générale (IV),
où
dans les formules (I) à (IV) telles que représentées ci-dessus, les radicaux R, R¹ et R² présentent les significations mentionnées dans la revendication 1.

3. Mélange d'esters selon les revendications 1 et/ou 2, **caractérisé en ce que** le radical R¹ est dérivé d'acides monocarboxyliques aromatiques, tels que l'acide benzoïque, l'acide o-tolylique, l'acide m-tolylique, l'acide p-tolylique, l'acide 4-tert-butylbenzoïque, l'acide 1-naphtoïque ou l'acide 2-naphtoïque.

4. Mélange d'esters selon les revendications 1 et/ou 2, **caractérisé en ce que** le radical R² est dérivé d'acides monocarboxyliques aliphatiques, tels que l'acide laurique, l'acide myristique, l'acide palmitique, l'acide stéarique, l'acide oléique, l'acide arachique ou l'acide béhénique.

5. Mélange d'esters selon les revendications 1 et/ou 2, **caractérisé en ce que** le radical R est dérivé d'un triméthylolalcane de formule générale (V), 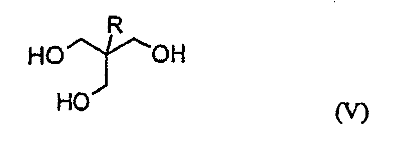 dans laquelle
R représente un atome d'hydrogène ou une chaîne alkyle en C₁ à C₄.

6. Mélange d'esters selon les revendications 1 et/ou 2 et 5, **caractérisé en ce que** le radical R est dérivé de triméthylolalcanes, tels que le triméthylolpropane ou le triméthyloléthane.

7. Procédé de préparation du mélange d'esters, **caractérisé en ce que** :
a) un ou plusieurs triméthylolalcanes sont estérifiés avec
b) de 108 à 180 % en moles (par rapport à 100 % en moles de triméthylolalcane) d'un ou de plusieurs acides monocarboxyliques en C₁₂ à C₂₂ aliphatiques ou dérivés d'acides monocarboxyliques en C₁₂ à C₂₂ aliphatiques, et
c) de 120 à 300 % en moles (par rapport à 100 % en moles de triméthylolalcane) d'un ou de plusieurs acides monocarboxyliques en C₇ à C₁₅ aromatiques ou dérivés d'acides monocarboxyliques en C₇ à C₁₅ aromatiques,
d) à des températures comprises entre 150°C et 300°C.

8. Procédé selon la revendication 7, **caractérisé en ce que** celui-ci est réalisé :
e) à l'aide de catalyseurs et/ou
f) en séparant les produits secondaires volatiles de l'estérification.

9. Procédé de préparation du mélange d'esters selon la revendication 7 ou 8, **caractérisé en ce que** de 110 à 150 % en moles (par rapport à 100 % en moles de triméthylolalcane) d'un ou de plusieurs acides monocarboxyliques en C₁₂ à C₂₂ aliphatiques ou dérivés d'acides monocarboxyliques en C₁₂ à C₂₂ aliphatiques et au moins la quantité manquante jusqu'à 300 % en moles (par rapport à 100 % en moles de triméthylolalcane) d'un ou de plusieurs acides monocarboxyliques en C₇ à C₁₅ aromatiques ou dérivés d'acides monocarboxyliques en C₇ à C₁₅ aromatiques sont utilisés.

10. Procédé de préparation du mélange d'esters selon l'une quelconque des revendications 7 à 9, **caractérisé en ce que** l'on utilise le triméthylolpropane ou le triméthyloléthane en tant que triméthylolalcane.

11. Procédé de préparation du mélange d'esters selon l'une quelconque des revendications 7 à 9, **caractérisé en ce que** :
• les acides monocarboxyliques en C₇ à C₁₅ aromatiques ou les dérivés d'acides monocarboxyliques en C₇ à C₁₅ aromatiques peuvent être non substitués ou substitués par des groupes alkyle en C₁ à C₄ et/ou
• les acides monocarboxyliques en C₁₂ à C₂₂ aliphatiques ou les dérivés d'acides monocarboxyliques en C₁₂ à C₂₂ aliphatiques peuvent être ramifiés, saturés ou oléfiniquement insaturés.

12. Procédé de préparation du mélange d'esters selon l'une quelconque des revendications 7 à 9 et 11, **caractérisé en ce que** les acides monocarboxyliques en C₇ à C₁₅ aromatiques ou les dérivés d'acides monocarboxyliques en C₇ à C₁₅ aromatiques sont l'acide benzoïque, l'acide o-tolylique, l'acide m-tolylique, l'acide p-tolylique, l'acide 4-tert-butylbenzoïque, l'acide 1-naphtoïque et/ou l'acide 2-naphtoïque, en particulier, l'acide benzoïque, ou des dérivés de ces acides ou leurs mélanges.

13. Procédé de préparation du mélange d'esters selon l'une quelconque des revendications 7 à 9 et 11, **caractérisé en ce que** les acides monocarboxyliques en C₁₂ à C₂₂ aliphatiques ou les dérivés d'acides monocarboxyliques en C₁₂ à C₂₂ aliphatiques sont l'acide laurique, l'acide myristique, l'acide palmitique, l'acide stéarique, l'acide oléique, l'acide arachique et/ou l'acide béhénique, en particulier l'acide laurique et/ou l'acide palmitique, ou des dérivés de ces acides ou leurs mélanges.

14. Procédé de préparation du mélange d'esters selon l'une quelconque des revendications 7 à 9, **caractérisé en ce que** l'on utilise :
● le triméthylolpropane en tant que triméthylolalcane ;
● l'acide benzoïque en tant qu'acide mono-carboxylique en C₇ à C₁₅ aromatique ; et
● l'acide laurique en tant qu'acide mono-carboxylique en C₁₂ à C₂₂ aliphatique.

15. Utilisation des mélanges d'esters selon la revendication 1 en tant que plastifiants pour des matières plastiques, tels qu'un polychlorure de vinyle, des copolymères à base de chlorure de vinyle, un polychlorure de vinylidène, des polyvinyl acétals, des polyacrylates, des polyamides, des polylactides, la cellulose et ses dérivés, des polymères caoutchouteux, tels qu'un caoutchouc acrylonitrile/butadiène, un caoutchouc acrylonitrile/butadiène hydrogéné, un caoutchouc chloroprène, un polyéthylène chloré, un chloro-sulfonylpolyéthylène, un caoutchouc éthylène/propylène, un caoutchouc acrylate et/ou un caoutchouc épichlorhydrine.

16. Matières plastiques comprenant les mélanges d'esters selon la revendication 1.

17. Matières plastiques selon la revendication 16, **caractérisées en ce que** celles-ci comprennent des additifs, tels que des agents stabilisants, des agents lubrifiants, des charges, des pigments, des agents ignifugeants, des agents photostabilisants, des agents gonflants, des auxiliaires de mise en oeuvre polymères, des agents améliorant la résistance aux chocs, des azurants optiques, des agents antistatiques et/ou des agents biostabilisants, ainsi que leurs mélanges.

18. Matières plastiques selon la revendication 16 ou 17, **caractérisées en ce que** celles-ci comprennent, en tant que plastifiants supplémentaires, des esters monoalkyliques de l'acide benzoïque, des diesters benzoïques de mono-, di-, tri- ou polyalkylèneglycols, des esters dialkyliques de diacides aliphatiques, des esters dialkyliques de diacides aromatiques, des esters trialkyliques de triacides aromatiques, des esters phényliques d'acides alcanesulfoniques, des esters alkyliques ou aryliques de l'acide phosphorique, des polyesters d'acides dicarboxyliques, ainsi que leurs mélanges.
